# EUROPÄISCHE PATENTSCHRIFT

(11) **EP 3 674 035 B1**
(45) Veröffentlichungstag und Bekanntmachung des Hinweises auf die Patenterteilung: **24.05.2023**
(21) Anmeldenummer: 19000541.3
(22) Anmeldetag: 02.12.2019
(51) Int. Cl.: F15B 15/28, B25B 5/12, H03K 17/95, G01D 5/20, B25B 5/16

(54) **SPANNVORRICHTUNG MIT INDUKTIVER ABFRAGEEINHEIT**
TENSIONING DEVICE WITH INDUCTIVE QUERY UNIT
DISPOSITIF DE SERRAGE POURVU D'UNITÉ D'INTERROGATION INDUCTIVE

(30) Priorität: 07.12.2018 DE 102018009534
(43) Veröffentlichungstag der Anmeldung: 01.07.2020
(73) Patentinhaber: Pepperl+Fuchs SE, 68307 Mannheim (DE)
(72) Erfinder: Freund, Thomas, 68199 Mannheim (DE); Schulz, Enrico, 68165 Mannheim (DE)
(74) Vertreter: Koch Müller Patentanwaltsgesellschaft mbH

(56) Entgegenhaltungen:
- EP-A2- 0 938 952
- EP-A2- 1 092 509
- DE-A1-102007 010 030
- DE-U1- 29 718 644

## Beschreibung

Die Erfindung betrifft eine Spannvorrichtung mit einer induktiven Abfrageeinheit.

Aus der DE 297 18 644 U1 ist Kniehebelspannvorrichtung mit einer Abfragekassette bekannt, wobei die Abfragekassette zwei zueinander beabstandete induktive Schaltelemente aufweist. Die Schaltelemente können entlang einer Schiene innerhalb der Kassette an mehreren diskreten Positionen arretiert werden. Die mittels Induktion ermittelten Schaltpunkte hängen kritisch von dem Abstand der Schaltelemente zu dem Signalgeber sowie von der Temperatur ab.

Eine ähnliche Spannvorrichtung ist aus der EP 1 092 509 A2 bekannt.

Eine weitere Spannvorrichtung ist aus der DE 198 08 631 A1 mit bekannt, wobei sich eine mindestens eine Spule umfassende Spulenanordnung entlang des gesamten Stellwegs des Gebers erstreckt.

Aus der DE 37 42 974 A1 ist eine Schaltungsanordnung zur Ermittlung der Bodenlage eines Fahrzeugs bekannt, wobei die Anordnung einen Sensor mit zwei koaxial zu einem Stoßdämpferkolben angeordneten Spulen aufweist, welche eine Brückenschaltung speisen.

Aus der DE 100 25 661 A1 ist ein Wegmeßsystem mit einem Geber und einem Sensor bekannt, wobei der Sensor ein oder zwei an einen Oszillator gekoppelte induktive Elemente umfasst.

Aus der DE 10 2007 010 030 A1 ist ein Inkrementalgeber bekannt, wobei eine lineare Lageänderung einer Teilungsspur mittels einer Abtasteinheit mit zwei induktiven Sensoren ermittelt wird, wobei die Sensoren so angeordnet sind, dass sich ihre Empfindlichkeitskurven teilweise überlappen.

Aus der US 2008/0101865 A1 ist eine Greifvorrichtung mit einer die Greifbackenposition erfassenden induktiv arbeitenden Sensoreinheit.

Vor diesem Hintergrund besteht die Aufgabe der Erfindung darin, eine Vorrichtung anzugeben, die den Stand der Technik weiterbildet und insbesondere zuverlässigere, präzisere Schaltsignale erzeugt.

Die Aufgabe wird durch eine Spannvorrichtung mit den Merkmalen des Patentanspruchs 1 gelöst. Vorteilhafte Ausgestaltungen der Erfindung sind Gegenstand von Unteransprüchen.

Gemäß dem Gegenstand der Erfindung wird Spannvorrichtung mit einem Gehäuse, einem in dem Gehäuse laufenden Kolben mit Kolbenstange und einer zumindest teilweise in dem Gehäuse angeordneten Abfrageeinheit bereitgestellt, wobei die Abfrageeinheit mindestens zwei Sensoreinheiten umfasst.

Die Sensoreinheiten sind entlang einer Längsachse der Kolbenstange zueinander beabstandet und in einem Abstand zu der Kolbenstange angeordnet.

Der Kolben und die Kolbenstange sowie ein an dem Kolben oder an der Kolbenstange angeordneter metallischer Signalgeber sind zwangsgeführt und zwischen einer ersten Endstellung und einer zweiten Endstellung bewegbar.

Außerdem ist die erste Sensoreinheit in einer parallel zu der Längsachse verlaufenden Richtung an der ersten Endstellung des Signalgebers und die zweite Sensoreinheit in einer parallel zu der Längsachse verlaufenden Richtung an der zweiten Endstellung des Signalgebers angeordnet.

Jede Sensoreinheit weist einen ersten induktiven Sensor mit einer ersten Empfindlichkeitskurve und einen zweiten induktiven Sensor mit einer zweiten Empfindlichkeitskurve auf.

Jeder erste Sensor und jeder zweite Sensor umfasst eine Induktionsspule als Teil eines Oszillators.

Die Induktionsspule des ersten Sensors weist zu der Induktionsspule des zweiten Sensors derselben Sensoreinheit in einer parallel zu der Längsachse der Kolbenstange verlaufenden Richtung von Spulenmitte zu Spulenmitte einen ersten Abstand auf, wobei sich die beiden Empfindlichkeitskurven teilweise überlappen.

Bei der Abfrageeinheit handelt es sich vorzugsweise um eine insgesamt austauschfähige Abfragekassette in Form einer Platine mit Befestigungselementen zur Befestigung an bzw. zumindest teilweise in dem Gehäuse der Spannvorrichtung, z.B. einer Kniehebelspannvorrichtung.

Vorzugsweise ist der Empfindlichkeitskurve des ersten Sensors und des zweiten Sensors identisch oder nahezu identisch oder unterschiedlich. Es sei angemerkt, dass sich der Empfindlichkeitskurve sich auch als Empfindlichkeitsbereiche beschreiben lässt. Die jeweiligen Empfindlichkeitskurven bestimmen die maximale Detektionsreichweite des jeweiligen Sensors.

Es versteht sich, dass das Anordnen des Signalgebers an dem Kolben oder an der Kolbenstange alle Anordnungsmöglichkeiten umfasst, welche dazu führen, dass sich der Signalgeber mit dem Kolben und der Kolbenstange zwangsgeführt mitbewegt.

Ein Vorteil der erfindungsgemäßen Vorrichtung ist, dass die Positionsbestimmung durch die erfindungsgemäßen Sensoreinheiten in erster Näherung unabhängig von dem Abstand der Sensoreinheiten zu dem Signalgeber ist. Hierdurch erübrigt sich insbesondere eine Kalibration der Abfrageeinheit nach dem Einsetzen in die Spannvorrichtung, insbesondere bei einem Austausch und Reparatur.

Ein weiterer Vorteil ist, dass die erzeugten Schaltsignale durch den Einsatz von jeweils zwei Sensoren pro Sensoreinheit bzw. pro Schaltpunkt im Wesentlichen temperaturunabhängig und damit zuverlässiger sind.

Die erfindungsgemäße Spannvorrichtung ermöglicht es außerdem einem Anwender den Schaltpunkt gegebenenfalls mittels einer Steuereinheit und ohne physikalische bzw. bauliche Änderung des Setups zu verschieben bzw. an eigene Wünsche/Rahmenbedingungen anzupassen.

Gemäß einer ersten Ausführungsform weist der Signalgeber parallel zu der Längsachse der Kolbenstange eine erste Breite auf, wobei die erste Breite jeweils dem ersten Abstand zwischen den Induktionsspulen jeder Sensoreinheit entspricht. Alternativ entspricht die erste Breite jeweils dem n-fachen des ersten Abstands mit 0,9 ≤ n ≤ 1,1.

In einer anderen Ausführungsform weist jeder Sensor eine Empfindlichkeitskurve auf und der erste Abstand ist so gewählt, dass sich die Empfindlichkeitskurve des ersten Sensors und des zweiten Sensors einer Sensoreinheit teilweise überlappen.

Gemäß einer ersten Weiterbildung sind die erste Sensoreinheit und die zweite Sensoreinheit jeweils dazu ausgelegt, dann ein Schaltsignal auszugeben, wenn sich das von dem Signalgeber generierte Nachweissignal des einen Sensors der Sensoreinheit auf einer ansteigenden Flanke befindet und sich gleichzeitig das von dem Signalgeber generierte Nachweissignal des anderen Sensors derselben Sensoreinheit auf einer absteigenden Flanke der jeweiligen Empfindlichkeitskurve befindet.

Alternativ oder zusätzlich sind die erste Sensoreinheit und die zweite Sensoreinheit jeweils dazu ausgelegt, ein Schaltsignal ausgeben, wenn sich das von dem Signalgeber generierte Nachweissignal des ersten Sensors der Sensoreinheit und das von dem Signalgeber generierte Nachweissignal des zweiten Sensors derselben Sensoreinheit entsprechen oder bis auf eine vorgegebene maximale Differenz entsprechen, wobei die Nachweissignale jeweils größer als ein vorgegebener Minimalwert sind.

Durch das Bestimmen der Schaltsignale anhand von zwei Empfindlichkeitskurven kann einerseits ein sehr zuverlässiger Schaltpunkt sichergestellt werden. Andererseits ermöglichen die jeweils zwei involvierten Induktionsspulen ein einfaches individuelles Anpassen des Schaltpunkts.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Erstreckung sind nicht maßstäblich und weisen, sofern nicht anders angegeben, auch keine ableitbaren geometrischen Relationen zueinander auf. Darin zeigt:
- Figur 1: eine schematische Ansicht einer ersten erfindungsgemäßen Ausführungsform einer Spannvorrichtung,
- Figur 2: eine schematische Ansicht von Empfindlichkeitskurven einer erfindungsgemäßen Sensoreinheit.

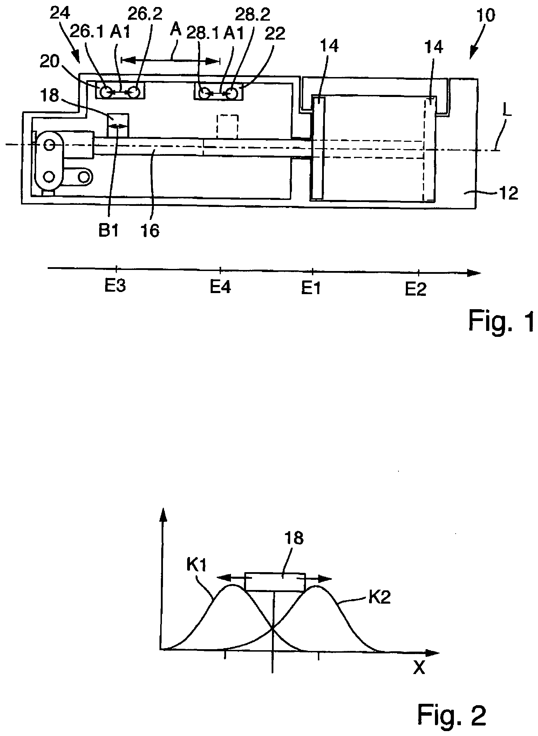

Die Abbildung der Figur 1 zeigt schematisch eine als Kniehebelspannvorrichtung ausgebildete erfindungsgemäße Spannvorrichtung 10. Die Spannvorrichtung umfasst ein Gehäuse 12, einen in dem Gehäuse 12 zwischen einer ersten Endstellung E1 und einer zweiten Endstellung E2 laufenden Kolben 14 mit Kolbenstange 16. Der Kolben 14 an der Kolbenstange 16 ist dazu ausgelegt, zwischen den beiden Endstellungen E1 und E2 eine geführte Bewegung auszuführen, wobei die Bewegungsrichtung mit einer Längsachse L der Kolbenstange zusammenfällt.

Im dargestellten Ausführungsbeispiel ist ein metallischer Signalgeber 18 an der Kolbenstange 16 angeordnet. Der Signalgeber nimmt für die erste Endstellung E1 des Kolbens 14 eine entsprechende erste Endstellung E3 und für die zweite Endstellung E2 des Kolbens 14 eine entsprechende zweite Endstellung E4 ein.

Ebenfalls im Gehäuse 12 angeordnet sind eine erste Sensoreinheit 20 und eine zweite Sensoreinheit 22, wobei die beiden Sensoreinheiten einen Teil einer Abfrageeinheit 24 bilden und weitere Teile der Abfrageeinheit, wie beispielsweise eine Platine mit Auswertelogik nicht dargestellt sind.

Die beiden Sensoreinheit 20 und 22 sind jeweils in einem Abstand zu der Kolbenstange 16 angeordnet. Die erste Sensoreinheit 20 ist in Richtung der Längsachse der Kolbenstange 16 an der ersten Endstellung E3 des Signalgebers angeordnet und die zweite Sensoreinheit 22 an der zweiten Endstellung E4 des Signalgebers, so dass die beiden Sensoreinheiten 20 und 22 in einer parallel zu der Kolbenstange 16 verlaufenden Richtung zueinander einen Abstand A aufweisen.

Jede Sensoreinheit 20 und 22 weist jeweils einen ersten Sensor 26.1 bzw. 26.2 und einen zweiten Sensor 28.1 bzw. 28.2 auf, wobei jeder Sensor 26.1, 26.2, 28.1, 28.2 jeweils eine Induktionsspule und einen Oszillator umfasst.

Die beiden Sensoren 26.1 und 26.2 bzw. 28.1 und 28.2 einer Sensoreinheit 20 bzw. 22 sind so angeordnet, dass jeweils die Induktionsspule des ersten Sensors 26.1 bzw. 28.1 zu der Induktionsspule des zweiten Sensor 26.2 bzw. 28.2 derselben Sensoreinheit 20 bzw. 22 in einer parallel zu der Längsachse L der Kolbenstange 16 verlaufenden Richtung von Spulenmitte zu Spulenmitte einen ersten Abstand A1 aufweist.

Der Signalgeber 18 weist in einer parallel zu der Längsachse L der Kolbenstange 16 verlaufenden Richtung eine dem ersten Abstand A1 entsprechende erste Breite B1 auf.

In der Abbildung der Figur 2 sind exemplarisch die Empfindlichkeitskurven K1 des ersten Sensors 26.1 bzw. 26.2 und die Empfindlichkeitskurve K2 des zweiten Sensors 28.1 und 28.2 aufgetragen über einer Position x des Signalgebers 18 dargestellt. Im dargestellten Ausführungsbeispiel sind die beiden Sensoren normiert, so dass die beiden Empfindlichkeitskurven K1 und K2 denselben Maximalwert bzw. denselben Verlauf aufweisen. Der Abstand zwischen den jeweiligen Maxima der Empfindlichkeitskurven K1 und K2 entspricht dem ersten Abstand A1 zwischen den Induktionsspulen der Sensoren. Der erste Abstand ist so gewählt, dass sich die beiden Empfindlichkeitskurven K1 und K2 überlappen.

Befindet sich der Signalgeber 18, wie dargestellt, genau in der Mitte zwischen den beiden Sensoren, so ergibt sich aus den Empfindlichkeitskurven K1 und K2, dass die in den beiden Sensoren durch den Signalgeber 18 generierten Nachweissignale denselben Wert aufweisen. Dies ist unabhängig von einer absoluten Höhe bzw. einem absoluten Wert der Empfindlichkeitskurven bzw. der Nachweissignale. Diese Position des Signalgebers 18 ist somit unabhängig von einem lateralen Abstand zwischen Signalgeber und Sensoren eindeutig und zuverlässig bestimmbar.

## Patentansprüche

1. Spannvorrichtung (10) mit einem Gehäuse (12), einem in dem Gehäuse (12) laufenden Kolben (14) mit einer Kolbenstange (16) und einer zumindest teilweise in dem Gehäuse (12) angeordneten Abfrageeinheit (24), wobei
- die Abfrageeinheit (24) mindestens zwei Sensoreinheiten (20, 22) umfasst,
- die Sensoreinheiten (20, 22) entlang einer Längsachse (L) der Kolbenstange (14) zueinander beabstandet und in einem Abstand zu der Kolbenstange (14) angeordnet sind,
- der Kolben (14) und die Kolbenstange (14) sowie ein an dem Kolben (14) oder an der Kolbenstange (16) angeordneter metallischer Signalgeber (18) zwangsgeführt zwischen einer ersten Endstellung (E1, E3) und einer zweiten Endstellung (E2, E4) bewegbar sind,
- die erste Sensoreinheit (20) in einer parallel zu der Längsachse (L) verlaufenden Richtung an der ersten Endstellung (E3) des Signalgebers (18) angeordnet ist und die zweite Sensoreinheit (22) in einer parallel zu der Längsachse (L) verlaufenden Richtung an der zweiten Endstellung (E4) des Signalgebers (18) angeordnet ist,
**dadurch gekennzeichnet, dass**
- jede Sensoreinheit (20, 22) einen ersten induktiven Sensor (26.1, 28.1) mit jeweils einer ersten Empfindlichkeitskurve (K1) und einem zweiten induktiven Sensor (26.2, 28.2) mit jeweils einer zweiten Empfindlichkeitskurve (K2) aufweist,
- jeder erste Sensor (26.1, 28.1) und jeder zweite Sensor (26.2, 28.2) eine Induktionsspule als Teil eines Oszillators umfasst und
- jeweils die Induktionsspule des ersten Sensors (26.1, 28.1) zu der Induktionsspule des zweiten Sensor (26.2, 28.2) derselben Sensoreinheit (20, 22) in einer parallel zu der Längsachse (L) der Kolbenstange (16) verlaufenden Richtung von Spulenmitte zu Spulenmitte einen ersten Abstand (A1) aufweist, wobei sich die beiden Empfindlichkeitskurven (K1, K2) der beiden Sensoren (26.1, 28.1, 26.2, 28.2) teilweise überlappen.

2. Spannvorrichtung (10) nach Anspruch 1, **dadurch gekennzeichnet, dass** der Signalgeber (18) parallel zu der Längsachse (L) der Kolbenstange (16) eine erste Breite (B1) aufweist, wobei die erste Breite (B1) jeweils dem ersten Abstand (A1) zwischen den Induktionsspulen jeder Sensoreinheit entspricht oder die erste Breite (B1) dem n-fachen des ersten Abstands (A1) entspricht mit 0,9 ≤ n ≤ 1,1.

3. Spannvorrichtung (10) nach Anspruch 1 oder 2, **dadurch gekennzeichnet, dass** die Empfindlichkeitskurven (K1, K2) der Sensoren (26.1, 28.1, 26.2, 28.2) gleich sind.

4. Spannvorrichtung (10) nach Anspruch 3, **dadurch gekennzeichnet, dass** die erste Sensoreinheit (20) und die zweite Sensoreinheit (22) jeweils dazu ausgelegt sind, dann ein Schaltsignal auszugeben, wenn sich das von dem Signalgeber (18) generierte Nachweissignal des einen Sensors (26.1, 28.1, 26.2, 28.2) der Sensoreinheit (20, 22) auf einer ansteigenden Flanke befindet und sich gleichzeitig das von dem Signalgeber (18) generierte Nachweissignal des anderen Sensors (26.1, 28.1, 26.2, 28.2) derselben Sensoreinheit (20, 22) auf einer absteigenden Flanke der jeweiligen Empfindlichkeitskurve (K1, K2) befindet.

5. Spannvorrichtung (10) nach Anspruch 3 oder 4, **dadurch gekennzeichnet, dass** die erste Sensoreinheit (26.1, 28.1) und die zweite Sensoreinheit (26.2, 28.2) jeweils dazu ausgelegt sind, dann ein Schaltsignal ausgeben, wenn sich das von dem Signalgeber (18) generierte Nachweissignal des ersten Sensors (26.1, 28.1) der Sensoreinheit (20, 22) und das von dem Signalgeber (18) generierte Nachweissignal des zweiten Sensors (26.2, 28.2) derselben Sensoreinheit (20, 22) entsprechen oder bis auf eine vorgegebene maximale Differenz entsprechen, wobei die Nachweissignale jeweils größer als ein vorgegebener Minimalwert sind.

## Claims

1. Tensioning device (10) with a housing (12), a piston (14), which runs in the housing (12), with a piston rod (16), and an interrogation unit (24) arranged at least partly in the housing (12), wherein
- the interrogation unit (24) comprises at least two sensor units (20, 22),
- the sensor units (20, 22) are arranged along a longitudinal axis (L) of the piston rod (16) at a mutual spacing and at a spacing from the piston rod (16),
- the piston (14) and the piston rod (16) as well as a metallic signal transmitter (18) arranged at the piston (14) or the piston rod (16) are movable between a first end setting (E1, E3) and a second end setting (E2, E4) under constrained guidance,
- the first sensor unit (20) is arranged in a direction, which extends parallel to the longitudinal axis (L), at the first end setting (E3) of the signal transmitter (18) and the second sensor unit (22) is arranged in a direction, which extends parallel to the longitudinal axis (L), at the second end setting (E4) of the signal transmitter (18),
**characterised in that**
- each sensor unit (20, 22) comprises a first inductive sensor (26.1, 28.1) with a respective first sensitivity curve (K1) and a second inductive sensor (26.2, 28.2) with a respective second sensitivity curve (K2),
- each first sensor (26.1, 28.1) comprise and each second sensor (26.2, 28.2) comprises an induction coil as part of an oscillator and
- in each instance the induction coil of the first sensor (26.1, 28.1) has a first spacing (A1) from the induction coil of the second sensor (26.2, 28.2) of the same sensor unit (20, 22) in a direction, which extends parallel to the longitudinal axis (L) of the piston rod (16), from coil centre to coil centre, wherein the two sensitivity curves (K1, K2) of the two sensors (26.1, 28.1, 26.2, 28.2) partly overlap.

2. Tensioning device (10) according to claim 1, **characterised in that** the signal transmitter (18) has a first width (B1) parallel to the longitudinal axis (L) of the piston rod (16), wherein the first width (B1) corresponds in each instance with the first spacing (A1) between the induction coils of each sensor unit or the first width (B1) corresponds with n times the first spacing (A1), wherein 0.9 ≤ n ≤ 1.1.

3. Tensioning device (10) according to claim 1 or 2, **characterised in that** the sensitivities curves (K1, K2) of the sensors (26.1, 28.1, 26.2, 28.2) are the same.

4. Tensioning device (10) according to claim 3, **characterised in that** the firs sensor unit (20) and the second sensor unit (22) are each configured for the purpose of issuing a switching signal when the detection signal, which is generated by the signal transmitter (18), of one sensor (26.1, 28.1, 26.2, 28.2) of the sensor unit (20, 22) is present on a ascending flank and at the same time the detection signal, which is generated by the signal transmitter (18), of the other sensor (26.1, 28.1, 26.2, 28.2) of the same sensor unit (20, 22) is present on a descending flank of the respective sensitivity curve (K1, K2).

5. Tensioning device (10) according to claim 3 to 4, **characterised in that** the first sensor unit (26.1, 28.1) and the second sensor unit (26.2, 28.2) are each configured to issue a switching signal when the detection signal, which is generated by the signal transmitter (18), of the first sensor (26.1, 28.1) of the sensor unit (20, 22) and the detection signal, which is generated by the signal transmitter (18), of the second sensor (26.2, 28.2) of the same sensor unit (20, 22) correspond or correspond apart from a predetermined maximum difference, wherein the detection signals are each greater than a predetermined minimum value.

## Revendications

1. Dispositif de serrage (10) doté d'un boîtier (12), d'un piston (14) courant dans le boîtier (12) avec une tige de piston (16) et d'une unité d'interrogation (24) agencée dans le boîtier (12), dans lequel
- l'unité d'interrogation (24) comprend au moins deux unités de détection (20, 22),
- les unités de détection (20, 22) sont écartées l'une de l'autre le long d'un axe longitudinal (L) de la tige de piston (14) et disposées à une certaine distance de la tige de piston (14),
- le piston (14) et la tige de piston (14), ainsi qu'un émetteur de signaux métallique (18) disposé sur le piston (14) ou sur la tige de piston (16), peuvent être déplacés de force entre une première position d'extrémité (E1, E3) et une deuxième position d'extrémité (E2, E4) et
- la première unité de détection (20) est disposée dans une direction courant parallèlement à l'axe longitudinal (L) sur la première position d'extrémité (E3) de l'émetteur de signaux (18) et la deuxième unité de détection (22) est disposée dans une direction courant parallèlement à l'axe longitudinal (L) sur la deuxième position d'extrémité (E4) de l'émetteur de signaux (18),
**caractérisé en ce que**
- chaque unité de détection (20, 22) comporte un premier détecteur inductif (26.1, 28.1) doté d'une première courbe de sensibilité (K1) et un deuxième détecteur inductif (26.2, 28.2) doté d'une deuxième courbe de sensibilité (K2),
- chaque premier détecteur (26.1, 28.1) et chaque deuxième détecteur (26.2, 28.2) comprend une bobine d'induction faisant partie d'un oscillateur et
- la bobine d'induction du premier détecteur (26.1 28.1) présente par rapport à la bobine d'induction du deuxième détecteur (26.2, 28.2) de la même unité de détection (20, 22) une première distance (A1) de centre de bobine à centre de bobine dans une direction courant parallèlement à l'axe longitudinal (L) de la tige de piston (16), les deux courbes de sensibilité (K1, K2) des deux détecteurs (26.1, 26.2, 28.1, 28.2) se chevauchant partiellement.

2. Dispositif de serrage (10) selon la revendication 1, **caractérisé en ce que** l'émetteur de signaux (18) présente parallèlement à l'axe longitudinal (L) de la tige de piston (16) une première largeur (B1), laquelle première largeur (B1) correspond respectivement à la première distance (A1) entre les bobines d'induction de chaque unité de détection ou la première largeur (B1) correspond au multiple n de la première distance (A1) avec 0,9 ≤ n ≤ 1,1.

3. Dispositif de serrage (10) selon la revendication 1 ou 2, **caractérisé en ce que** les courbes de sensibilité (K1, K2) des détecteurs (26.1, 28.1, 26.2, 28.2) sont identiques.

4. Dispositif de serrage (10) selon la revendication 3, **caractérisé en ce que** la première unité de détection (22) et la deuxième unité de détection (22) sont conçues pour émettre un signal de commutation quand le signal de détection généré par l'émetteur de signaux (18) d'un détecteur (26.1, 28.1, 26.2, 28.2) de l'unité de détection (20, 22) se trouve sur un front ascendant et qu'en même temps le signal de détection généré par l'émetteur de signaux (18) de l'autre détecteur (28.1, 28.1, 26.2, 28.2) de la même unité de détection (20, 22) se trouve sur un front descendant de la courbe de sensibilité (K1, K2) en question.

5. Dispositif de serrage (10) selon la revendication 3 ou 4, **caractérisé en ce que** la première unité de détection (26.1, 28.1) et la deuxième unité de détection (28.1, 28.2) sont conçues pour émettre un signal de commutation quand le signal de détection généré par l'émetteur de signaux (18) du premier détecteur (26.1, 28.1) de l'unité de détection (20, 22) et le signal de détection généré par l'émetteur de signaux (18) du deuxième détecteur (26.1, 28.1) de la même unité de détection (20, 22) se correspondent ou se correspondent dans la limite d'une différence maximale prédéfinie, les signaux de détection étant respectivement supérieurs à une valeur minimale prédéfinie.
